Europäisches Patentamt

European Patent Office

Office européen des brevets

(11) Publication number: **0 045 663**
A2

## EUROPEAN PATENT APPLICATION

(21) Application number: 81303578.9

(22) Date of filing: 05.08.81

(51) Int. Cl.³: **B 01 D 13/00**
C 02 F 1/44

(30) Priority: 06.08.80 US 175801

(43) Date of publication of application:
10.02.82 Bulletin 82/6

(84) Designated Contracting States:
AT BE CH DE FR GB IT LI LU NL SE

(71) Applicant: WATER REFINING COMPANY, INC.
500 North Verity Parkway
Middletown Ohio 45042(US)

(72) Inventor: Davis, Stephen H.
PO Box 605
Middletown, Ohio 45042(US)

(74) Representative: Warren, Anthony Robert et al,
BARON & WARREN 18 South End Kensington
London W8 5BU(GB)

(54) Spiral-wrapped reverse osmosis membrane assembly.

(57) A spiral-wrapped reverse osmosis membrane assembly
(10) is provided which can be positioned in the main water
service line of a household or business to provide a source of
water having a reduced solids and dissolved salts content.
Adjacent walls (42,42') of the wrapped membrane are
separated by ribbed spacer elements (34) which provide a
multiplicity of longitudinal flow passages (26) through the
assembly. These flow passages (26) are sized and arranged
so that there is little or no pressure drop in the water flowing
through the device. The flow of feed water through the
assembly maintains the membrane surfaces clear from salts
and suspended solids.

FIG-1

FIG-2

EP 0 045 663 A2

## SPIRAL-WRAPPED REVERSE OSMOSIS MEMBRANE ASSEMBLY

This invention relates to an apparatus for removing salts and suspended solids from water, and more particularly to an apparatus, incorporating a reverse osmosis membrane, designed for installation in the main water service line of a residence, business, or industrial plant.

Treatment of water by the use of reverse osmosis membranes has existed for many years. In areas where the water supply contains relatively large concentrations of suspended solids and/or ions (i.e., sodium, chloride, sulfate) not readily removed by conventional water softening systems, various types of water treatment devices, incorporating reverse osmosis membranes, have been developed for use. Additionally, reverse osmosis devices have long been used to desalinize sea water. However, all of these prior art devices have had one or more drawbacks in their design or operation.

At least two basic forms of reverse osmosis treatment devices have been developed for use, a tubular filter type and a spiral-wrapped type. Many prior household systems utilized tubular reverse osmosis membrane units in which water was flowed over one or more porous tubes covered with a membrane. However, such systems, utilizing a plurality of tubular type reverse osmosis membrane units have been disadvantageous in that the total membrane area available for filtration is limited. Additionally, such systems have typically encountered difficulty with sealing. Another approach to reducing precipitation on the membrane surface of tubular units is disclosed in our EPC application No. 81301937.9. The latter application discloses placing a plurality of tubular reverse osmosis membrane units in the resin tank of a water softener. The churning of the pellets of resin which occurs during regeneration tends to scrub the membrane surfaces and reduce the amount of precipitates which may have formed on these surfaces.

In an attempt to cut wastage of water, Clark, U.S. Patent No. 3,716,143, designed a tubular reverse osmosis membrane assembly for household use in which the assembly is placed in series flow with the main water service line entering the home. However, in order not to restrict water flow or reduce appreciably the pressure of the water supplied to the home, the assembly requires a complex parallel-series flow scheme through eighteen different membrane cells in the assembly. Water from the main service line is diverted through three parallel flow paths, with six tubular membrane units being connected in series in each of the flow paths. Obviously, increasing the complexity and number of membrane units in the assembly increases both the cost and the chances for leaks and/or ruptures in the assembly.

In many prior systems using the available pressure in a water supply line, the treated water was sent to a pressurized storage container. The buildup of back pressure in the system from water stored in the container reduced the efficiency of the reverse osmosis membrane. Manjikian, U.S. Patent No. 3,849,305, attempted to solve this problem by using a nonpressurized storage container. However, that system still suffered from the problem of sending large volumes of water to a drain where it was wasted.

The other major type of reverse osmosis system, the spiral-wrapped type, has mainly found use in large commercial scale desalination units. Such spiral-wrapped systems employ membrane sheets spaced apart by separator grids. These systems raise the water supply pressure to several hundred pounds per square inch prior to its introduction to the reverse osmosis membrane and are principally designed for high pressure, high volume desalination of sea water. Examples of such systems include Westmoreland, U.S. Patent No. 3,367,504; Kohl, U.S. Patent No. 3,554,378; Ishii et al, U.S. Patent No. 3,962,096; and Goldberg et al, U.S. Patent No. 3,993,566.

However, such systems required an essentially continuous flow of water across the membrane surface to reduce concentration buildups of salts and suspended solids. The precipitation of such salts and solids on the membrane adversely affected its efficiency. In order to reduce such precipitation, the water flowing over the membrane surface which did not pass through the membrane was discharged to a drain and therefore wasted. Thus, such prior art systems either used an increased flow of water over the membrane, resulting in a severe wastage, or a reduced flow of water over the membrane, resulting in decreased membrane performance.

Because of the high salt and suspended solids concentrations in sea water and the need to treat large volumes of water, such systems are designed to operate at pressures approaching $70Kg/cm^2$ (1000 psia). Because of these high operating pressures, these systems require the use of expensive materials of construction to withstand the additional pressure. Even then, the membranes are subject to leaks and ruptures. Moreover, such systems are unconcerned with the large amounts of untreated water which flow past the membranes and are returned to the sea because of the essentially limitless supply of sea water to feed the system.

Accordingly, the need exists in the art for a simple, yet reliable, reverse osmosis membrane assembly for low pressure household applications which can handle large flow rates without wasting water.

According to one aspect of the present invention a reverse osmosis membrane assembly having a spirally-wrapped reverse osmosis membrane contained therein is provided. The assembly includes a housing with a feed water inlet located at a first end thereof and an untreated water outlet at the opposite end. A porous tube is located in the housing and defines a longitudinally extending product water flow channel, the end of the porous tube adjacent the first end of the housing being closed, and the opposite end of the tube defines a product water outlet. The membrane is spirally wrapped around the tube with the interior of the membrane being in fluid communication with the interior of the tube. Spacing elements are provided for spacing adjacent layers of the membrane apart and define a multiplicity of longitudinal flow passages through the housing. The combined cross-sectional area of the fluid flow passages is at least as great as the cross-sectional area of the feed water inlet.

In a preferred embodiment of the invention, the membrane is of a generally rectangular configuration and is formed by sandwiching a core of loosely packed or woven material between two sheets of membrane material. The sandwich is then sealed on three edges, leaving the fourth edge open with the packing material in fluid communication with a porous tube.

A spacer element is provided to be placed over one surface of the membrane. The spacer element contains a multiplicity of ribs extending both longitudinally over the length and latitudinally over the width of the membrane. The spacer element is preferably fabricated from a flexible material so that it can be easily bent or rolled.

To form the membrane assembly, the membrane and spacer element are spirally wrapped around the porous tube. The areas between the ribs of the spacer element form a multiplicity of longitudinal passages along the length of the tube for water to flow through. The spirally-wrapped membrane assembly is then placed in a cannister or housing having a feed water inlet and an untreated water outlet. The end of the porous tube facing the feed water inlet is sealed off to prevent untreated water from entering the tube. The opposite end of the tube defines a product water outlet passing out of the housing.

In operation, water under pressure, such as a standard household pressure of between 3.5-7 $Kg/cm^2$ (50-100) psia, is fed to the inlet of the housing. There, the flow of water is split to flow through the multiplicity of passages formed by the ribbed spacer element. Because of the pressure differential which is maintained between the water in the housing and the interior of the porous tube, water is forced by a reverse osmosis process through the walls of the membrane material and into the core of loosely packed material. The treated water in the core material follows a spiral path into the porous tube where it is then taken to storage or ultimate use.

The dissolved salts and suspended solids in the feed water which are left behind by the reverse osmosis process are flushed from the outer surfaces of the membrane by the flow of water through the fluid passages. In order to minimize any pressure drop which might occur as the feed water flows through the housing, the spacer element is sized and arranged so that the combined cross-sectional area for flow through the flow passages formed by the spacer element is as least as great as the cross-sectional area of the feed water inlet. Depending upon the size and length of the housing and the projected flow rate of water through the housing, the combined cross-sectional area of the flow passages may be at least twice that of the feed water inlet. In this manner, pressure drops through the housing can be kept at less than 0.35 $kg/cm^2$ (5 psia), and preferably near 0 $kg/cm^2$.

The assembly embodying the present invention operates at relatively low pressures, and does not require pumps creating artificially high pressures to be operative as did some prior systems. Moreover, the membrane assembly utilizes high water flow rates to maintain the reverse osmosis membrane free from a buildup of solids and yet does not waste any water as did some prior systems. Finally, the membrane assembly utilizes a single, compact spiral-wrapped membrane element avoiding the problems of previous systems which required multiple membrane elements arranged in complex flow patterns.

Accordingly, it is an object of the present invention to provide a relatively simple, yet reliable, reverse osmosis membrane assembly which can be placed in the main service water line of a home or business and yield a supply of treated water without wasting any of the water fed through it.

In order that invention may be more readily understood, reference will now be made to the accompanying drawings in which:

Fig. 1 is a schematic diagram, in section, of the operation of a reverse osmosis membrane assembly embodying the present invention;

Fig. 2 is an enlarged section of a portion of the spirally wrapped membrane and spacer element;

Fig. 3 is an elevational view, partly in section taken along line 3--3 in Fig. 2; and

·Fig. 4 is a perspective view, partly cut away of the wrapped membrane in the housing of the assembly.

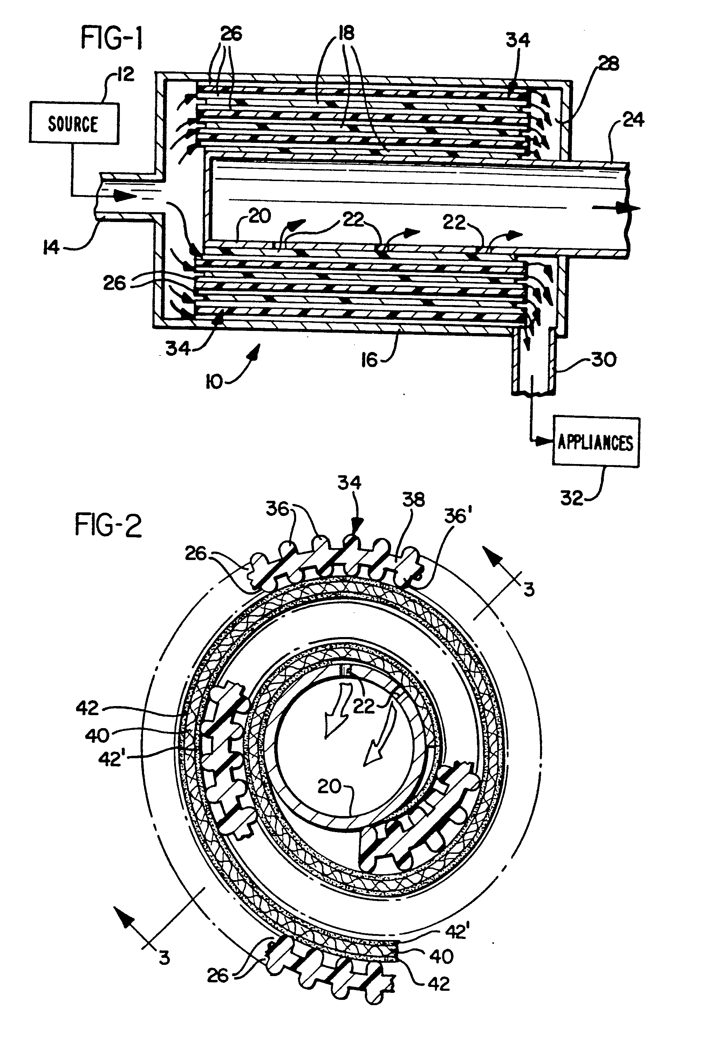

Referring to Fig. 1, in one embodiment of the invention the reverse osmosis membrane assembly 10 is designed to be positioned in the main water service line entering a home or business. A source of water under pressure 12, which may be a city water distribution system or a well and pump, is supplied to feed water inlet 14 of assembly 10. Preferably, source 12 is able to supply water at pressures of from about 50-100 psia.

Membrane assembly 10 additionally comprises a housing 16 having a spirally-wrapped reverse osmosis membrane element 18 contained therein. A porous tube 20 having holes 22 defines a product water collection channel along the length of housing 16. The end of tube 20 facing inlet 14 is sealed off to prevent any untreated water from entering the tube while the opposite end of tube 20 defines a product water outlet 24 through the opposite end of housing 16. Adjacent walls of the spirally wrapped membrane element 18 are spaced apart by a spacer element 34, described in further detail below, to form fluid flow passages 26 along the length of the housing. As shown, the spacer element 34 extends slightly further forward than the membrane element 18 to ensure that the leading edges of the membrane element do not obstruct fluid flow passages 26.

In operation, water under pressure entering inlet 14 is split into a multiplicity of flow paths indicated by the arrows through passages 26. Because of the pressure differential between the water in housing 16 and the interior of tube 20, water is forced by a reverse osmosis process into the interior of membrane elements 18. From there, the treated product water, containing substantially less suspended solids and ions, follows a spiral flow path until reaching the interior of tube 20 through holes 22. From there, the product water can be sent to a storage container or used as required. Under normal operating conditions, about 14-23 liters (4-6 gallons) per day of product water will be collected.

Dissolved salts and suspended solids which concentrate on the surfaces of membrane element 18 are flushed away by the flow of feed water through passages 26. Water not passing into membrane element 18 is collected at header 28 and flows out of housing 16 through untreated water outlet 30. The untreated water is supplied to the home and may be used in other appliances 32 such as bathtubs, sinks, dish and clothes washers, and the like, as well as interior and exterior faucets from which treated water is not required.

In order to minimize any pressure drops which may occur in the assembly, the number and size of flow passages 26 are arranged so that their combined cross-sectional area for flow is at least as great as the cross-sectional area of the main water service line entering housing 16. In a preferred embodiment, flow passages 26 are sized so that their combined cross-sectional area for flow is at least twice that of the main service line. It has been found that obtaining sufficient area for flow of water through the membrane assembly is critical in maintaining pressure to the remainder of the household plumbing. Preferably, pressure drops are limited to less than $0.35$ Kg/cm$^2$ (5 psia) and, even more preferably, approximately $0$ Kg/cm$^2$ through the assembly.

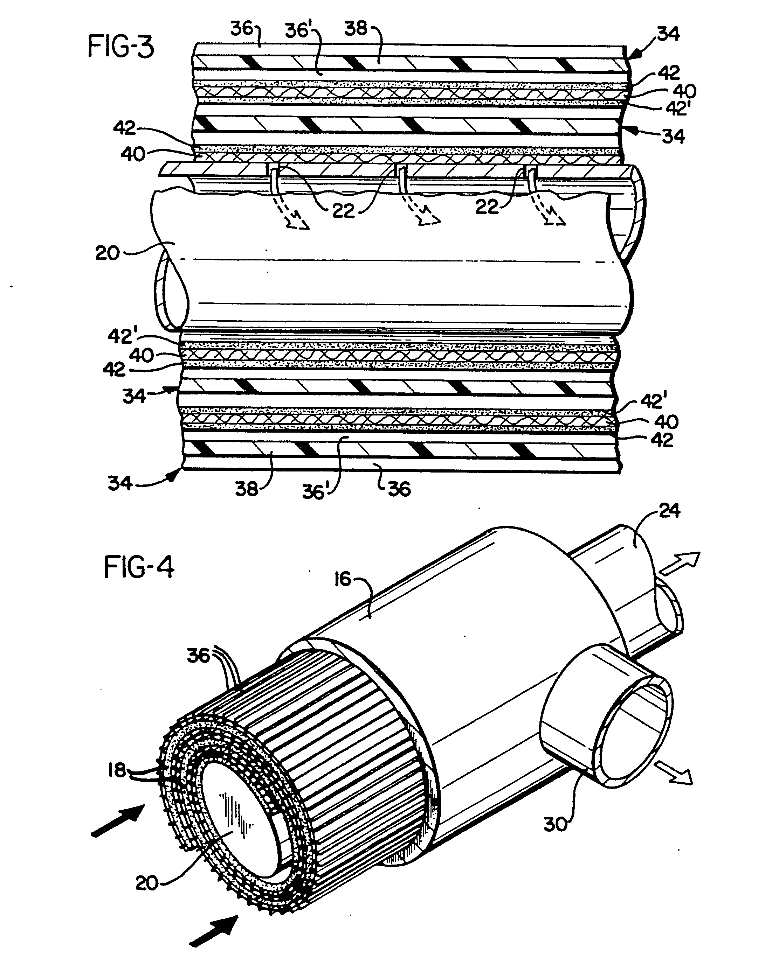

As best shown in Figs. 2 and 3, flow passages 26 are formed by a ribbed spacer element 34 which may be formed from any flexible material. For example, the spacer element may be extruded or injection molded from a thermoplastic polymeric material using known techniques. Spacer element 34 has a plurality of ribs 36, 36' extending outwardly from a central strip 38. The ribs 36, 36' are substantially in line contact with adjacent walls of membrane element 18 and extend longitudinally along the length of the assembly (best shown in Fig. 4). By this arrangement, substantially all of the surface of the membrane element is available for fluid contact with the water passing through the passages 26.

Membrane element 18 is formed by sandwiching a loosely packed core material 40 between opposing generally rectangular sheets 42, 42' of a reverse osmosis membrane material. Core material 40 may be a woven or nonwoven fabric or fibrous material such as a polyester. The membrane may be any of a number of known materials used for reverse osmosis such as regenerated cellulose or cellulose acetate. Three edges of the sandwich are sealed together while the fourth edge is attached and sealed to tube 20 so that core material 40 is in fluid communication with holes 22 as shown in Figs. 2 and 3. The membrane element 18 and spacer element 34 are then wrapped around tube 20 forming a spiral configuration. As shown in Fig. 4, spacer element 34 should be sized so that it is at least flush and preferably extends somewhat beyond the ends of membrane element 18. This construction avoids any problems of fluid pressure folding over the edges of the membrane element and blocking fluid flow passages.

In a typical application, the membrane assembly will be sized to complement a nominal 2.5 cm (1 inch) diameter pipe which is the main water service into a household or business. The assembly is approximately 30 cm (1 foot) in length and contains approximately 75 cm (2.5 lineal feet) of membrane element 18. The ribs on spacer element 34 are approximately 0.11 cm (0.045 inches) high and 0.08 cm (0.030 inches) wide with an edge to edge spacing of 0.11 cm (0.045 inches). Strip 38 is approximately 0.06 cm (0.025 inches) thick resulting in an overall spacer thickness of 75 cm (0.115 inches). There are approximately 400 ribs extending over the 75 cm (2.5 lineal feet) of membrane. When wrapped, the combined cross-sectional area of flow passages 26 exceeds 10.3 cm$^2$ (1.6 square inches), resulting in a total flow area approximately twice the cross-sectional area of the inlet pipe.

While the apparatus herein described constitutes a preferred embodiment of the invention, it is to be understood that the invention is not limited to this precise apparatus, and that changes may be made without departing from the scope of the invention, as defined in the appended claims.

CLAIMS

1.     A reverse osmosis membrane assembly (10) comprising, a housing (16), a feed water inlet (14) located at a first end of said housing (16) and an untreated water outlet (30) located at the opposite end thereof, a porous tube (20) located in said housing and defining a longitudinally extending product water flow channel through said housing, the end of said porous tube (20) adjacent said first end of said housing (16) being closed and the opposite the end of said tube defining a product water outlet (24) through said opposite end of said housing (16), a membrane element (18) for treating a feed water stream by reverse osmosis, said membrane element (18) being spirally wrapped about said porous tube and the interior of said membrane element (18) being in fluid communication with the interior of said porous tube (20), and means (34) for spacing adjacent layers of said membrane means from each other to define a multiplicity of longitudinal fluid flow passages (26) through said housing, the combined cross-sectional area of said fluid flow passages (26) being at least as great as the cross-sectional area of said feed water inlet (14).

2.     An assembly as claimed in claim 1, in which said membrane element (18) includes a layer of loosely packed core material (40) sandwiched between two generally rectangular sheets of a reverse osmosis membrane material (42, 42'), three of the edges of said sheets of membrane material being sealed to each other and the fourth edges being sealed to said porous tube (20) with said core material (40) being in fluid communication with the interior of said porous tube (20).

3. An assembly as claimed in claim 1, in which said spacing means (34) comprises a sheet of flexible material defining a plurality of interconnected longitudinally extending ribs (36, 36'), said ribs being substantially in line contact with adjacent layers of said membrane element (42, 42'), the spacings between said ribs forming fluid flow passages (26).

4. An assembly as claimed in claim 2 or 3, in which the combined cross-sectional area of said fluid flow passages (26) is at least twice as great as the cross-sectional area of said feed water inlet (14).

5. A reverse osmosis membrane assembly comprising, a housing (16), a feed water inlet (14) located at a first end of said housing (16) and an untreated water outlet (30) located at the opposite end thereof, a porous tube (20) in said housing and defining a longitudinally extending product water flow channel through said housing, the end of said porous tube (20) adjacent said first end of said housing (16) being sealed and the opposite the end of said tube defining a product water outlet (24) through said opposite end of said housing (16), a membrane element (18) for treating a feed water stream by reverse osmosis, said membrane element (18) being spirally wrapped about said porous tube and the interior of said membrane element (18) being in fluid communication with the interior of said porous tube (20), and means (34) for spacing adjacent layers of said membrane element from each other to define a multiplicity of longitudinal fluid flow passages (26) through said housing, said fluid flow passages (26) being sized and arranged such that the pressure drop between water entering said feed water inlet and leaving said untreated water outlet is from 0-0.35 Kg/cm$^2$ (0-5 psia).

6.     A spiral-wrapped reverse-osmosis membrane system for the removal of salts and suspended solids from water using relatively low pressures and relatively high flow rates comprising, a source of water under household pressure (12), a plurality of appliances which utilize water (32), pipe means (14, 30) connecting said source of water to said appliances, and means (10) connected in series flow with said pipe means for removing salts and suspended solids from said source of water, said means comprising a housing (16) having a feed water inlet (14), an untreated water outlet (30), and a product water outlet (24), a porous tube (20) in said housing in fluid communication with said product water outlet (24), and a membrane element (18) for purifying water by reverse osmosis, said membrane element (18) being spirally wrapped about said porous tube (20) and the interior of said membrane element being in fluid communication with the interior of said porous tube, and means (34) for spacing adjacent layers of said membrane element from each other to define a multiplicity of longitudinal fluid flow passages (26) through said housing (16).

7.     A system as claimed in claim 6, in which the combined cross-sectional area of said fluid flow passages (26) is at least as great as the cross-sectional area of said pipe means (14, 30).

8.     A system as claimed in claim 6, in which said membrane element (18) includes a layer of loosely packed core material (40) sandwiched between two generally rectangular sheets of a reverse osmosis membrane material (42, 42'), three of the edges of said sheets of membrane material being sealed to each other and the fourth edges being sealed to said porous tube with said core material (40) being in fluid communication with the interior of said porous tube (20).

9.     A system as claimed in claim 6, in which said spacing means (34) comprises a sheet of interconnected longitudinally extending ribs (36, 36') of a flexible material, said ribs being in point contact with adjacent layers (42, 42') of said membrane element, the spacings between said ribs forming fluid flow passages (26).

10.     A system as claimed in claim 8 or 9, in which the combined cross-sectional area of said fluid flow passages (26) is at least twice as great as the cross-sectional area of said pipe means (14, 30).

11.     A system as claimed in claim 6, in which said fluid flow passages (26) are sized and arranged such that the pressure drop between water entering said feed water inlet (14) and leaving said untreated water outlet (30) is from 0-0.35 Kg/cm$^2$ (0-5 psia).

FIG-1

26    18    34    28

12    24

SOURCE

14    20    22    22

26

34    16    10    30

APPLIANCES

32

FIG-2

34    36    38    36'

26

3

42    22    40    42'

20

3

42'    40

26    42

FIG-3

FIG-4